# EUROPEAN PATENT APPLICATION

(11) **EP 3 208 639 A1**
(43) Date of publication of application: **23.08.2017**
(21) Application number: 14904019.8
(22) Date of filing: 15.10.2014
(51) Int. Cl.: G02B 3/00

(54) **METHOD FOR MANUFACTURING MICROARRAY LENS**

(71) Applicant: Mpnics Co., Ltd., Gwangju 500-779 (KR)
(72) Inventor: KANG, Sang Do, Gwangju 506-870 (KR); KWON, Hyung Jun, Gwangju 506-870 (KR); BAEK, Seung Jun, Gwangju 506-304 (KR); OH, Seung Keun, Gwangju 506-755 (KR)
(74) Representative: Beck & Rössig European Patent Attorneys
(86) International application number: PCT/KR2014/009674
(87) International publication number: WO 2016/060292

(57) **Abstract**

The present invention relates to a method of manufacturing a microarray lens and, more particularly, to a method of manufacturing a microarray lens, the method being able to form a plurality of depression in precise aspheric shapes on a substrate and to easily adjust or change the number and the gaps of lenses by forming depressions on a substrate using a probe and depositing a lens layer on the substrate with the depressions.

## Description

### Technical Field

The present invention relates to a method of manufacturing a microarray lens and, more particularly, to a method of manufacturing a microarray lens, the method being able to form a plurality of depressions in precise aspheric shapes on a substrate and to easily adjust or change the number and the gaps of lenses by forming depressions on a substrate using a probe and depositing a lens layer on the substrate with the depressions.

### Background Art

A microarray lens is an important part for the next generation optical systems such as optical communication devices, optical information storage devices, sensors, and displays.

In the field of optical communication, a microarray lens is applied to multi-channel communication modules influencing large-capacity optical efficiency and used as an important part for increasing capacity, efficiency, and channels.

A microarray glass lens having a size of tens to hundreds of micrometers is increasingly required for the field of optical communication.

Further, the microarray lens may be applied to optical information storage devices such as a CD or a DVD for recording data in the field of optical information recording and may also be applied to high-efficiency optical/image sensors by improving optical sensitivity in the field of sensors.

Further, as for the field of displays, the microarray lens may be used for imaging devices by being applied to backlight parts and laser projection units together with a polygon mirror.

Such a microarray lens has been disclosed in Korean Patent Application No. 2005-0048401.

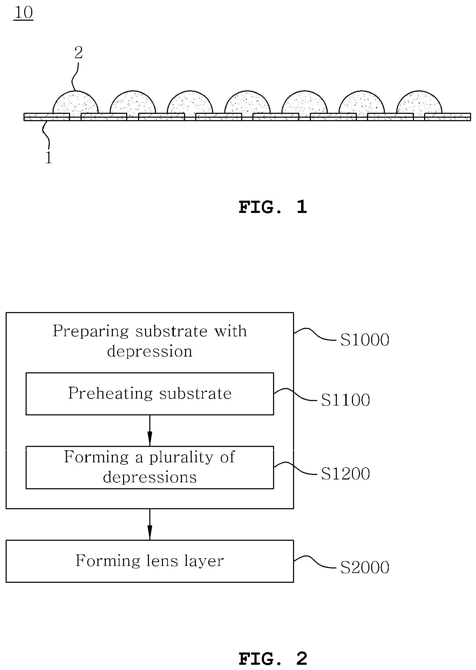

As shown in FIG. 1, a microarray lens 10 of the related art includes a substrate 1 and lens units 2 on the substrate, from which the lens units 2 protrude.

Since the lens units 2 protrude outward, they may be scratched by external environmental factors, so the product may be damaged.

Further, a method of manufacturing a microlens using etching has been disclosed in Korean Patent Application No. 2003-0005197.

The method directly forms a lens array by etching a glass substrate in a semiconductor process, so the radius of curvature of lenses is naturally made. Accordingly, it is difficult to achieve spherical or aspheric shapes for precise optical control.

Further, when etching is used, a mask is used for forming a pattern, so it is difficult to adjust or change the number and gaps of lenses and the manufacturing cost is also increased.

### Disclosure

### Technical Problem

The present invention has been made in an effort to solve the problems and an object of the present invention is to provide a method of manufacturing a microarray lens, the method being able to prevent a lens layer from protruding outward and reduce damage to a product due to external environmental factors by forming the lens layer on a side of a substrate with a plurality of depressions thereon, to form the depressions on the substrate in precise spherical or aspheric shapes, to easily adjust or change the number and gaps of lenses, and to reduce the manufacturing cost of the product.

Another object of the present invention is to provide a method of manufacturing a microarray lens, the method being able to adjust deposition speed by depositing a lens raw material in depressions formed on a side of a substrate using an electronic beam and to use lens raw materials having various refractive indexes commonly used in the related art, regardless of glass transition temperature (Tg).

However, the objects of the present invention are not limited to those stated above and other objects not stated above may be clear to those skilled in the art from the following description.

### Technical Solution

In order to achieve the objects of the present invention, a method of manufacturing a microarray lens having a plurality of microlenses includes: preparing a substrate having a plurality of depressions on a side; and forming a lens layer corresponding to shapes of the depressions by depositing a lens raw material on the side of the substrate on which the depressions are formed.

The preparing of a substrate may include: preheating a substrate; and forming a plurality of depressions corresponding to a shape of a convex end of a probe by pressing a side of the preheated substrate with the probe.

The end of the probe may be formed in a spherical or aspheric shape.

The material of the substrate may be glass or chalcogenide.

The lens raw material of the substrate may be glass or germanium (Ge).

The lens layer may be at least 0.1 higher in refractive index than the substrate.

The forming of a lens layer may include: preparing a lens raw material in a vacuum chamber; evaporating the lens raw material with electronic beams; and depositing the evaporated lens raw material on a side of the substrate.

### Advantageous Effects

The present invention has the following effects.

First, the method of manufacturing a microarray lens of the present invention forms depressions not by etching, but by a probe, so it is possible to form precise depressions in precise spherical or aspheric shapes on a substrate and easily adjust or change the number and gaps of lenses. Further, it is possible to reduce the costs for manufacturing the product because it does not use a mask.

Further, according to the method of manufacturing a microarray lens of the present invention, since a lens raw material is deposited in the depressions on a side of a substrate using electronic beams, it is possible to reduce bubbles that are generated in the depressions, remarkably reduce a defective proportion of the product, and adjust depression speed. Further, it is possible to use lens raw materials having various refractive indexes generally used in the related art regardless of glass transmission temperature (Tg).

However, the objects of the present invention are not limited to those stated above and other objects not stated above may be clear to those skilled in the art from the following description.

### Description of Drawings

FIG. 1 is a diagram showing a microarray lens of the related art.
FIG. 2 is a flowchart illustrating a method of manufacturing a microarray lens according to an embodiment of the present invention.
FIG. 3A is a diagram showing a substrate having a plurality of depressions formed in a step of preparing a substrate according to an embodiment of the present invention.
FIG. 3B is a diagram showing a lens layer deposited on the substrate in a step of forming a lens layer according to an embodiment of the present invention.
FIG. 4 is a diagram showing a microarray lens having a lens layer according to an embodiment of the present invention.

### <Description of the Reference Numerals in the Drawings>

100: Microarray lens
110: Substrate
111: Depression
120: Lens layer

### Mode for Invention

Terminologies used herein have been selected from terminologies that are extensively and generally used at present, but the applicant(s) has freely selected some terminologies in specific cases, so, in this case, the meanings should be understood not just from the names, but in consideration of the meanings stated or described in the following detailed description.

The technical configuration of the present invention is described hereafter in detail with reference to the embodiments shown in the accompanying drawings.

However, the present invention is not limited to the embodiments described herein and may be achieved in other ways. Like reference numerals used herein to describe the present invention refer to like components.

Referring to FIG. 2, a method of manufacturing a microarray lens according to the present invention can manufacture a microarray lens without a protruding lens layer through a step of preparing a substrate S1000 and a step of forming a lens layer S2000.

The step of preparing a substrate S1000 is a step of preparing a substrate having a plurality of depressions on a side.

Further, the step of preparing a substrate S1000 may be performed through a step of preheating a substrate S1100 and a step of forming depressions on the substrate S1200.

First, the step of preheating a substrate S1100 is performed.

The step of preheating a substrate S1100 is a step for more easily forming depressions 111 on the substrate using a probe.

Further, the temperature for preheating the substrate depends on the material of the substrate, so it is not specifically limited.

The substrate may be made of glass or chalcogenide.

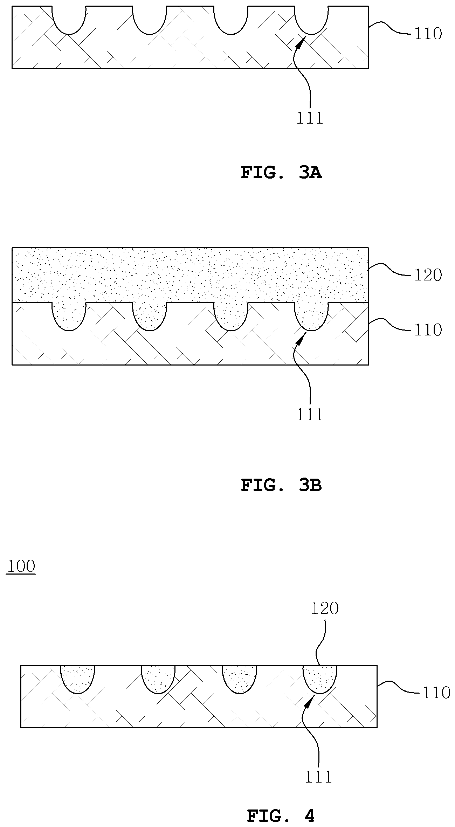

Next, as shown in FIG. 3A, the step of forming a plurality of depressions on the substrate is performed by pressing a side of the preheated substrate with a probe having a convex end.

This step is performed for forming depressions 111 corresponding on the shape of the end of the probe on the substrate 110.

In this step, it is possible to change the lens in various sizes and shapes by adjusting the size and shape of the end of the probe to fit to the use.

Further, the number of the depressions 111 can be freely adjusted, depending on the number of times of pressing different positions on the substrate with the probe, so it is not limited, and it is possible to easily adjust the gap between the center of a depression and the center of an adjacent depression.

The end of the probe has a spherical or aspheric shape and the depressions 111 formed on the substrate by the end of the probe also have a spherical or aspheric shape.

Further, a material having higher hardness than the substrate 110 may be used for the probe.

A super hard material may be used for the probe, and preferably, tungsten carbide or silicon carbide is used.

That is, it is possible to form the depressions 111 having a shape corresponding to the shape of the end of the probe by repeatedly pressing different positions on the substrate 110 with the probe.

Next, the step of forming a lens layer S2000 for forming a lens layer 120 on the side of the substrate 110 on which the depressions 111 are formed is performed.

As shown in FIG. 3B, a lens layer 120 is integrally formed with the substrate 110 through the step of forming a lens layer S2000, thereby manufacturing the microarray lens 100.

That is, since the lens layer 120 is formed flat on the side of the substrate 110 on which the depressions 111 are formed, the lens layer does not protrude, so it is possible to reduce damage to the product due to external environmental factors.

As shown in FIG. 4, the lens layer 120 may be deposited at least to fully fill the depressions 111 in the step of forming a lens layer S2000.

This is because it is possible to achieve the function of a lens by forming the lens layer 120 fully filling the depressions 111.

Further, the step of forming a lens layer S2000 may use electronic beams for deposition and the deposition using electronic beams may be performed through a step of preparing a lens raw material, an evaporating step, and a depositing step.

A lens raw material is prepared in a vacuum chamber and the step of preparing a lens raw material is performed.

Next, the evaporating step that evaporates the lens raw material using electronic beams is performed.

The evaporating step is a step for changing the lens raw material for forming the lens layer 120 into a gas state by melting it with electronic beams.

Next, the lens layer 120 is formed through the depositing step that deposits the gas-state lens raw material on the side of the substrate 110 on which the depressions 111 are formed.

As described above, when the lens layer 120 is deposited using electronic beams, bubbles are not generated in the depressions 111, so it is possible to remarkably reduce defective proportion of the product. Further, it is possible to use lens raw materials having various indexes generally used in the related art regardless of glass transition temperature Tg.

Further, the refractive index of the lens layer 120 should be designed to be larger than the refractive index of the substrate 110, and preferably, the refractive index of the lens layer 120 is designed to be at least 0.1 larger than the refractive index of the substrate 110.

This is because the microarray lens 100 according to the present invention has a double index of the substrate 110 and the lens layer 120, so the refractive index of the lens layer is designed to be at least 0.1 larger than the refractive index of the substrate in order to collimate or focus parallel light, depending on the purpose of use.

Further, it is possible to manufacture an infrared microarray lens that can be used for infrared wavelengths by using chalcogenide for the substrate and germanium for the lens layer.

### Embodiment

### (1) Step of preparing substrate (S1000)

### (1-1) Step of preheating substrate (S1100)

A substrate (glass, bk-7 by SCHOTTt) was prepared and preheated at 350□ ∼ 750□ under a nitrogen atmosphere.

### (1-2) Step of forming depression on substrate (S1200)

Depressions were formed by pressing the preheated substrate with a probe having a diameter of 0.23mm.

Four depressions were formed by repeatedly pressing with the probe and all gaps between the center of a depression and the center of adjacent depression were 0.25mm.

Thereafter, the substrate with the four depressions was slowly cooled.

### (2) Step of forming lens layer (S2000)

A lens layer was deposited on the substrate with the four depressions using electronic beams.

A lens raw material (glass, KVC89 by Sumita) was deposited on a side of the substrate with the depressions at deposition temperature of 270□, the degree of vacuum 3.0X10E-5, deposition speed of 2∼3A/sec, and rotational speed of 20∼25rpm/min.

As described above, according to a method of manufacturing a microarray lens and a microarray lens of the present invention, a lens layer does not protrude, so damage to the product due to external environmental factors can be reduced.

Further, according to a method of manufacturing a microarray lens and a microarray lens of the present invention, since a plurality of depressions is formed on a substrate using a probe, glass or chalcogenide that are difficult to machine can be used for the substrate and precise depressions can be formed on the substrate in spherical or aspheric shapes.

Further, since the depressions are formed on a substrate by pressing the substrate using a probe, it easy to adjust the number and gaps of lenses. Furthermore, since there is no need for a specific mask, it is possible to reduce the costs for manufacturing the product.

Although preferable embodiments of the present invention were described above with reference to the drawings, they are not limited thereto and may be changed and modified by those skilled in the art without departing from the scope of the present invention.

### Industrial Applicability

The microarray lens according to the present invention can be used for the next generation optical systems such as optical communication devices, optical information storage devices, sensors, and displays.

In particular, the microarray lens may be used as a collimating lens for collimating emitted lens by being positioned ahead of a light source array composed of a plurality of laser diodes or LEDs in the field of optical communication.

## Claims

1. A method of manufacturing a microarray lens having a plurality of microlenses, the method comprising:
preparing a substrate having a plurality of depressions on a side; and
forming a lens layer corresponding to shapes of the depressions by depositing a lens raw material on the side of the substrate on which the depressions are formed.

2. The method of claim 1, wherein the preparing of a substrate includes:
preheating a substrate; and
forming a plurality of depressions corresponding to a shape of a convex end of a probe by pressing a side of the preheated substrate with the probe.

3. The method of claim 2, wherein the end of the probe is formed in a spherical or aspheric shape.

4. The method of claim 2, wherein a material of the substrate is glass or chalcogenide.

5. The method of claim 2, wherein the lens raw material of the substrate is glass or germanium (Ge).

6. The method of claim 2, wherein the lens layer is at least 0.1 higher in refractive index than the substrate.

7. The method of claim 1 or 2, wherein the forming of a lens layer includes:
preparing a lens raw material in a vacuum chamber;
evaporating the lens raw material with electronic beams; and
depositing the evaporated lens raw material on a side of the substrate.
